# EUROPEAN PATENT SPECIFICATION

(11) **EP 4 338 138 B1**
(45) Date of publication and mention of the grant of the patent: **04.09.2024**
(21) Application number: 22723806.0
(22) Date of filing: 10.05.2022
(51) Int. Cl.: G07F 9/10, G07F 13/06, A47J 31/40, A47J 31/44

(54) **AUTOMATIC BEVERAGE VENDING MACHINE**
GETRÄNKEVERKAUFSAUTOMAT
DISTRIBUTEUR AUTOMATIQUE DE BOISSONS

(30) Priority: 10.05.2021 IT 202100011930
(43) Date of publication of application: 20.03.2024
(73) Proprietor: Rheavendors Industries S.p.A., 22100 Como (IT)
(72) Inventor: BRUZZESE, Fabio, 22100 Como (IT); MAGGIONI, Claudio, 22100 Como (IT); RIVA, Roberto, 22100 Como (IT); PIATTI, Gianluca, 22100 Como (IT); MOLINATI, Carlo Moreno, 22100 Como (IT); BELTRAME, Claudio, 22100 Como (IT)
(74) Representative: Studio Torta S.p.A.
(86) International application number: PCT/IB2022/054319
(87) International publication number: WO 2022/238883

(56) References cited:
- EP-A1- 0 783 859
- EP-A1- 1 998 297
- WO-A1-03/094681
- WO-A1-2008/067843
- WO-A1-2020/003467
- FR-A1- 2 883 089
- US-A- 5 169 221
- US-A1- 2004 144 800
- US-B1- 6 792 736

## Description

### Cross-reference to Related Applications

This patent application claims priority from Italian patent application No. 102021000011930 filed on May 10, 2021.

### Technical Field of the Invention

The present invention relates to an automatic beverage vending machine, in particular coffee, tea, cappuccino and hot chocolate, to which the following discussion will explicitly refer without thereby losing generality.

### State of the Art

As is known, automatic beverage vending machines are normally connected to the water supply network and generally comprise tanks containing soluble products, mixing chambers for mixing water with a soluble product or with a mixture of soluble products, dispensers and conduits for connecting the tanks to the mixing chambers and the mixing chambers to the dispensing nozzles.

The known automatic beverage vending machines then typically also comprise an assembly for producing espresso coffee, at least one solenoid valve for controlling the delivery of water into each mixing chamber, dosing means for measuring the exact amount of soluble product required to obtain a specific beverage, and a vacuum cleaner for cleaning the dispensing conduits and the mixing chambers from any residues that may be deposited as a result of dispensing the beverage.

In the automatic beverage vending machines of the prior art, the parts listed above and others that are not mentioned, all known as "components for producing beverages", are mounted in a specific or dedicated compartment.

In order to meet the ever-increasing need for particularly compact automatic beverage vending machines, the components are placed in close contact with each other or at least partially overlapping each other.

The Applicant has been able to ascertain in practice that the arrangement of the components in side-by-side and partially overlapping positions allows, on the one hand, for the realization of compact automatic beverage vending machines, but, on the other hand, it actually makes it extremely difficult and often impossible for technicians to access the automatic beverage vending machines from the front in order to carry out any scheduled maintenance or to carry out repair interventions or for simple inspection or minor interventions on the automatic beverage vending machines without having to completely remove some of these components or parts thereof, thus creating access aisles or compartments. This inevitably leads to particularly long intervention times and machine downtimes, which generate inevitable costs and lost revenue.

On the other hand, access from the rear of the vending machine is often impossible because of the particular layout of the automatic beverage vending machine itself, and requires in any case moving or advancing the entire automatic beverage vending machine, which is more difficult the smaller the space around the automatic beverage vending machine and/or if the automatic beverage vending machine is located in areas of strong passage, as is often the case in public places.

The problem described above is partly solved by particular types of automatic beverage vending machines, in which the assembly for producing espresso coffee can be extracted from the front independently of the other components. However, these types of automatic beverage vending machines only allow a simple extraction of the assembly for producing coffee, leaving the problem for the rest of the components untouched.

US 2004/144800 describes an automatic beverage vending machine in which a movable element carrying a part of the components is slidable between an inserted position and an extracted position. The movable element supports a flap door, which carries another part of components and is hinged to the movable element to rotate around a hinge axis parallel to a sliding direction of the movable element and is therefore movable in its overturned position only when the movable element is arranged in its extracted position.

WO 2008/067843 A1 discloses a beverage vending machine in which an internal supporting structure with all the components is rotatable around a vertical axis. WO 03/094681 A1 discloses a beverage vending machine having components being disposed in a compartment closed at the front by a supporting element which can be hinged to a position wherein the compartment is open.

### Subject and Summary of the Invention

Aim of the present invention is to realize an automatic beverage vending machine, which allows to solve in a simple and economical way the above-mentioned problems and, in particular, an automatic beverage vending machine whose construction characteristics allow immediate access to each of the various components indicated above without the need to disassemble others or parts thereof in order to access them.

A further aim of the present invention is to realize an automatic beverage vending machine whose construction characteristics allow easy access to the various components in a short time, in safety and in order to keep the components themselves on board the automatic beverage vending machine so as to facilitate and speed up the operations of putting the vending machine back into operation.

According to the present invention, an automatic beverage vending machine is realized, as claimed in Claim 1.

### Brief Description of the Drawings

Figure 1 is a perspective view, with parts removed for clarity's sake, of a preferred embodiment of an automatic beverage vending machine realized according to the dictates of the present invention.
Figures 2 and 3 are similar figures to Figure 1 and show the vending machine of Figure 1 in two different inspection and/or maintenance conditions.
Figures 4 to 6 show, in perspective view and to an enlarged scale with parts removed for clarity's sake, an assembly of Figures 1 to 3 arranged in a functional position and, respectively, in two different inspection/maintenance positions.

### Detailed Description of Preferred Embodiments of the Invention

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the enclosed drawings. Therefore, the present invention shall not be limited to the shown and described embodiments, but it must be granted the widest protection scope in accordance with the features disclosed and claimed.

Unless otherwise defined, all the herein used technical and scientific terms have the same meaning commonly used by the ordinary skilled in the art of the present invention, In case of conflict, the present invention, including definitions provided, will be binding. Furthermore, the examples are provided for merely illustrative purposes and must not be regarded as limiting.

In order to ease the understanding of the herein described embodiments, reference will be made to some specific embodiments and a specific language will be used to describe them. The terminology used in the present document aims at describing only particular implementations and is not intended to limit the scope of the present invention.

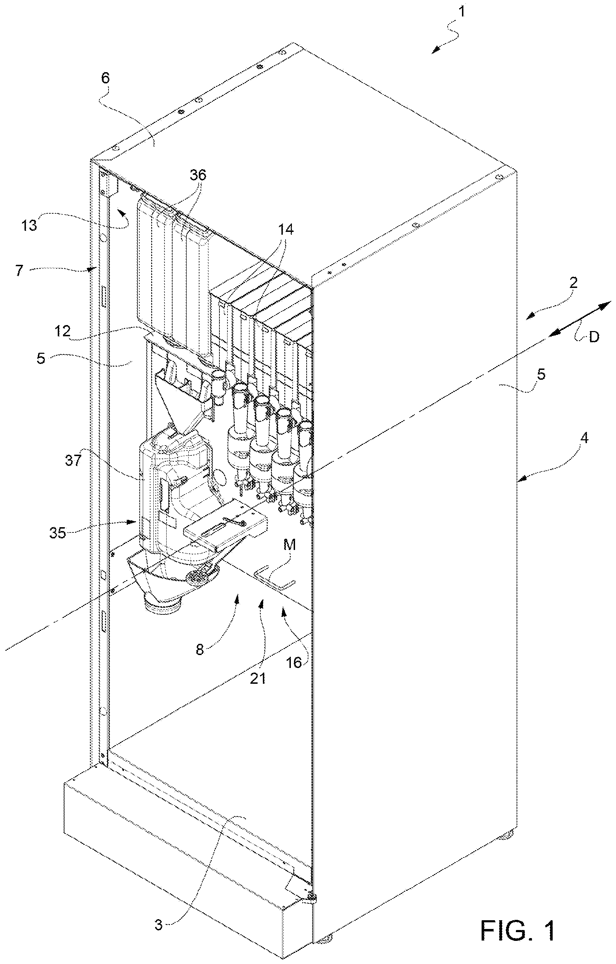

In Figures 1 to 3, reference number **1** denotes an automatic beverage vending machine as a whole.

The automatic beverage vending machine **1** comprises an external casing or container **2,** in turn, comprising, a floor support base **3,** a rear wall **4.** two side walls **5** and an upper wall **6** facing the support base **3.**

The support base **3** and the side **5** and upper **6** walls delimit a front or anterior opening **7** facing the rear wall **4** and for the access from the front to the container **2.**

The container **2** delimits a chamber **8,** inside which a beverage preparation assembly **10** is at least partially housed, in general and, in turn, comprising a plurality of components, per se known and not described in detail, and generically indicated by **11.**

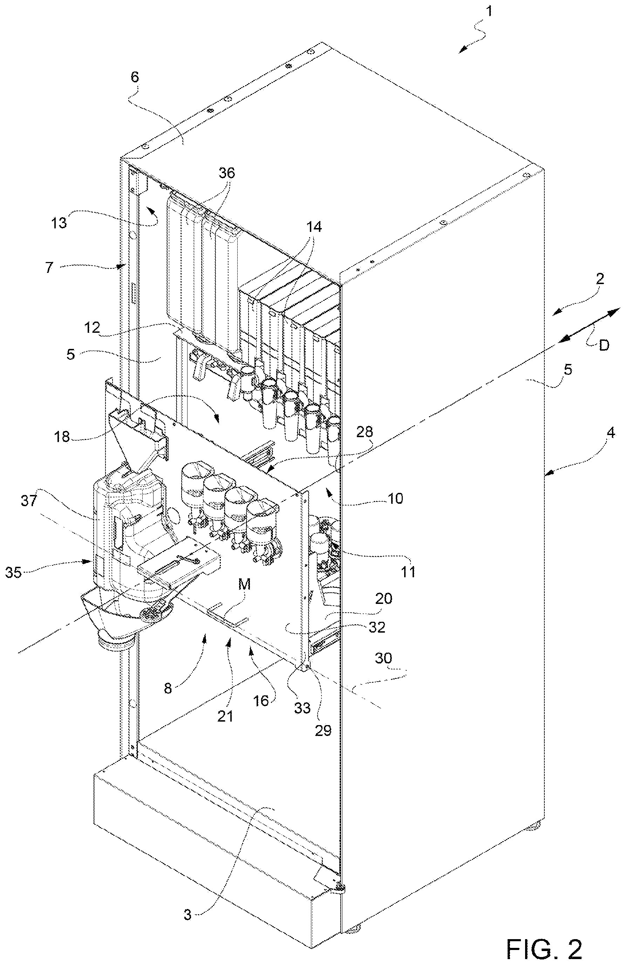

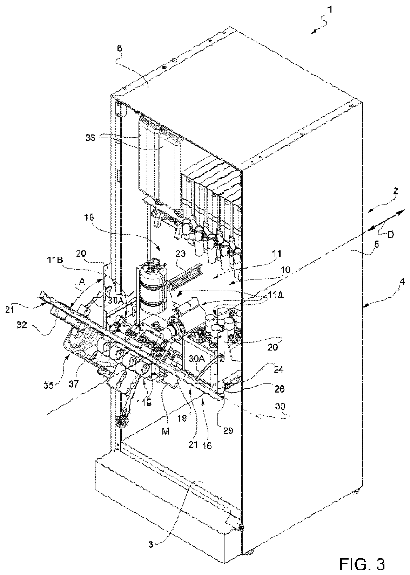

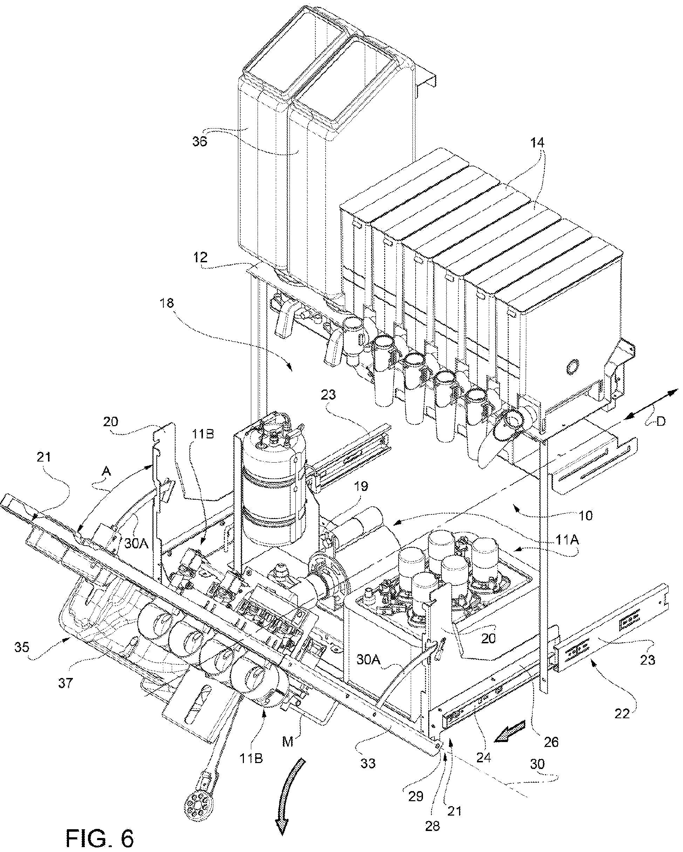

With reference to Figures 2 and 3 and, in particular, Figure 6, the assembly 10 comprises a fixed shelf **12,** which extends horizontally between the two side walls **5,** in a position facing the upper wall **6** to delimit with the upper wall **6** itself a compartment **13.**

The compartment **13** houses a plurality of tanks **14** for storing soluble products, which are arranged to rest on the shelf **12.**

According to a variant not shown, the shelf **12** is coupled to the remaining part of the container **2** directly, for example to the side walls **5** by means of a guide and slide device which allows the shelf **12** to slide to and from the back wall **4** between a retracted position, in which it keeps the tanks **14** in one of their operational positions, and an advanced or extracted position, in which the tanks **14** extend through the opening **7** or completely outside of the container **2.** so that they can be inspected or cleaned or replaced if necessary.

Again, with reference to Figure 2 and with reference to Figures 3 to 6, the automatic beverage vending machine **1** further comprises a sliding drawer **16** arranged between the shelf **12** and the base **3.**

The drawer **16** delimits with parts of the container **2** a compartment **18** (Figure 1) for housing at least part of the components **11** of the assembly **10.**

In particular, the drawer **16** comprises a base plate **19,** two sidewalls **20** and an anterior door **21.**

The drawer **16** is coupled to the side walls **20** by means of a pair of guide and slide assemblies **22** for sliding in opposite directions in a direction **D** parallel to the walls **5** and **6** and orthogonal to the wall **4.**

Each assembly **22** comprises a fixed guide **23** stably connected to the relative side wall **5** and a slide **24** sliding along the relative fixed guide **23.**

Each slide **24** is fixed to the relative sidewall **20** directly or by the interposition of respective attachment structures **26** each stably connected to a relative sidewall **20,** like in the example described and shown in particular in Figure 6.

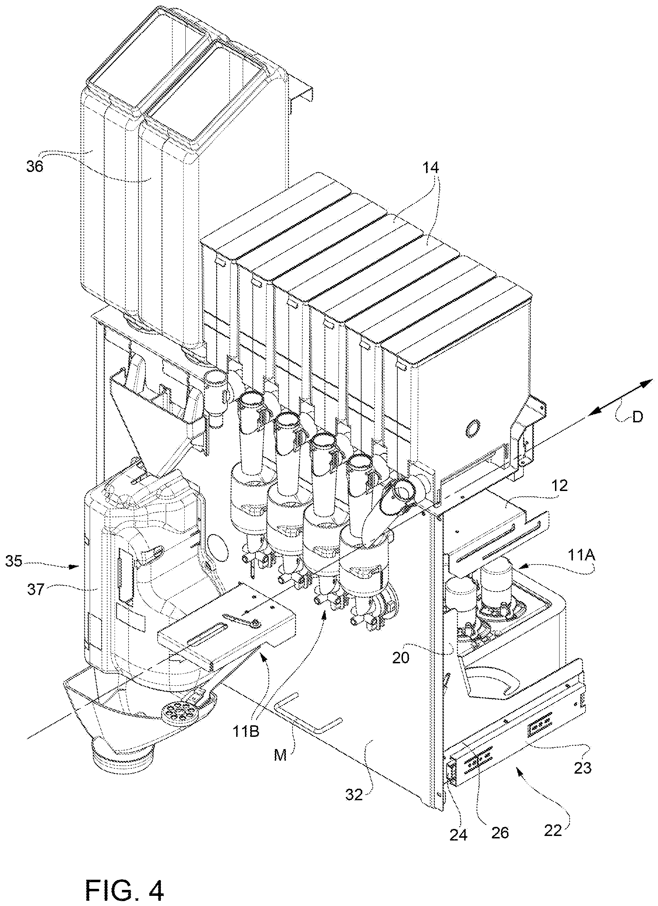

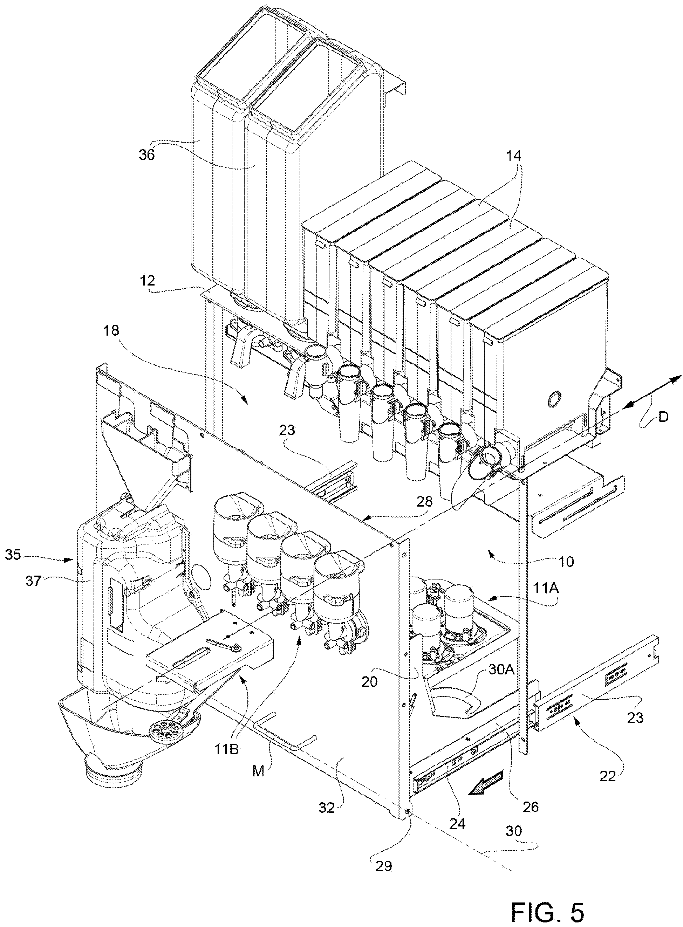

By acting on a handle **1** of the drawer **16,** the assemblies **22** allow the drawer **16** to be moved along the direction **D** and to be arranged in a plurality of intermediate positions between two extreme end of stroke positions, of which one is operational retracted, shown in Figures 1 and 4, and one is extracted shown in Figures 5 and 6.

In both end of stroke positions, the drawer **16** is coupled to, and supported by, the container **2.**

With reference to Figures 3 and 6, the door **21** is a movable door with respect to the base plate **19.** In particular, the door **28** is a flap door and rotatable with respect to the base plate **19** and to the sidewalls **20** around a hinge axis **30** which is horizontal and orthogonal to the direction **D.** Conveniently, the hinge axis **30** is arranged adjacent to the base plate **19** and conveniently below the base plate **19.**

Preferably, the door **21** is hinged to the structures **26** by means of a hinge device **28** having relative hinge pins **29.**

The door **21** is movable between two extreme end of stroke angular positions, one of which is an operational vertical closing the compartment **18,** shown in Figures 1,2 4 and 5, and a forward overturned position, shown in Figures 3 and 6. When arranged in its overturned position, the door **21** is held in this position by lateral tie rods **30A** and is rotated with respect to the vertical position by an angle **A** varying between 30° and 60° degrees and conveniently an angle of substantial 45°.

According to a variant not shown, the door **21,** when arranged in its overturned position, forms an extension of the wall **19.**

In the example described the door **21** comprises a flat panel **32** and two side brackets **33** for hinging to the relative structures **26** and forming parts of the hinge device **28.**

However, the door **21** is made or hinged, the base plate **19** carries part of the components **11,** indicated by **11A.**

The components **11A** are, in part, directly rested and made integral with the base plate **19** and, in part, supported by their own attachment structures to the base plate **19.**

On the other hand, the door **21** carries another part of component **11,** which are indicated by **11B**.

The components **11A** and **11B** are distributed or positioned on the base plate **19** and, respectively, on one face or on both opposite faces of the door **21** in order to avoid interference between the components themselves during opening/closing of the door **21** and so as to prevent a technician from even partially decoupling one or more components **11** in order to be able to access other components **11**.

In this way, when the drawer **16** is arranged in its extracted position it allows access to part of the components 11, while when also the door **21** is in its overturned position it is possible to inspect or act directly on each component **11,** since the components **11** are visible and immediately accessible.

The intervention of an expert technician is therefore facilitated by the fact that he can easily act by partially or totally extracting the drawer **16** and, when necessary, **by** overturning the door **21** forward.

Any technical intervention is then facilitated by the fact that the drawer **16** and the relative components 11, regardless of the position of the drawer **16** in the direction **D** or of the door **21** with respect to the container **2,** continue to be supported by the container **2,** so that the technician is not required to exert a high degree of efforts in lifting and/or moving the drawer **16** and the relative components **11,** of which, however, the technician(s) in charge of the vending machine would bear the responsibility if the drawer **16** were decoupled from the container **2.**

In the example described, the back wall **19** and the door **21** are flat, however, they may be shaped and/or provided with recesses or projections, respectively, for housing or supporting/retaining one or more components **11.**

Still with reference to the attached figures, the automatic beverage vending machine **1** also comprises an espresso coffee preparation assembly **35.**

The assembly **35** comprises, in turn, containers **36** for the storage of coffee powder, resting on the shelf **12,** and a brewing assembly **37,** per se known, carried by the door **21** and, preferably, stably connected to an external surface of the same door **21** and projecting in a cantilever fashion therefrom.

Lastly, the vending machine **1** comprises a plurality of pipes connecting between them the various components **11** and shut-off and safety valves not visible in the attached figures for the sake of clarity but commonly known and now universally used in similar vending machines and by the same owner.

From the foregoing, it is evident that the use of a drawer with a flap door allows, with respect to the known solutions, on the one hand, to bring into view the entire attachment surface of the components **11,** which is maximum when the door **21** forms an extension of the base wall **19,** and, on the other hand, to distribute the components **11** so that it is possible to inspect and/or intervene on each of them or on most of them without the need to disassemble other components or parts of the same components. This makes it possible to drastically reduce intervention times and machine downtimes, which aspect is particularly appreciated when the vending machine is located in areas of strong passage or in areas with narrow stopping or manoeuvring spaces.

The fact then that the drawer **16** always remains coupled to the container **2,** regardless of its extraction condition, and therefore always supported by the container **2,** allows the operator to carry out any inspection/maintenance/replacement intervention with minimum physical efforts, which efforts would be necessary and burdensome if the drawer **16** could be removed and moved away from the container **2.**

Not only that, but the constant coupling of the drawer **16** to the container **2** allows the operator in charge of the vending machine to operate in total safety, as all parts in relative motion and all removable parts are always supported by the container **2.** Finally, it appears evident that in the vending machine 1, the technician can inspect and/or intervene at least on the components carried by the flap door 21 regardless of the position of the drawer 16 with respect to the container 2, including the position in which the drawer 16 is completely or partially inserted in the container 2 itself. The foregoing is allowed by the fact that the flap door 21 is hinged so as to rotate around a hinge axis 30 which is horizontal and orthogonal to the direction D of translation of the same drawer 16.

## Claims

1. An automatic beverage vending machine **(1),** the vending machine **(1)** comprising a container **(2)** delimiting a housing chamber **(8)** and having an opening **(7)** for access to said chamber **(8);** a beverage preparation assembly **(10, 35)** having a plurality of components **(11)** for producing beverages housed at least partly in said chamber **(8)** and support means **(12, 16)** for said components(**11**); said support means **(12, 16)** comprise a first support element **(19)** for a first part **(11A)** of said components **(11)** and a second support element **(21)** for a second part (**11B**) of said components **(11);** wherein said first support element comprises a horizontal wall **(19),** and in that at least part of said first components **(11A)** is directly rested on said wall **(19)** or is coupled to said wall **(19)** by the interposition of attachment structures to said wall **(19);** guide and slide means **(22),** being interposed between the first support element **(19)** and said container **(2)** to allow said first support element **(19)** a translation in a direction **(D)** between two extreme end of stroke positions, one of which is inserted in said chamber **(8)** and one of which is at least partially extracted from said chamber **(8);** hinge means **(28)** being interposed between said first support element **(19)** and said second support element **(21),** for allowing the rotation of said second support element **(21)** with respect to said first support element **(19)** around a hinge axis **(30)** which is horizontal and orthogonal to said direction **(D),** regardless of the position of said first support element **(19)** between said extreme end of stroke positions;
wherein the second support element **(21)** is movable between two extreme end of stroke angular positions, one of which is an operational vertical position for closing said chamber **(8),** and one of which is a forward overturned position;
wherein said first **(19)** and said second **(21)** support elements form part of an extractable drawer **(16)** permanently coupled to said container **(2)** and housing at least part of said components **(11);** said second support element forming a flap door **(21)** of said drawer **(16).**

2. The vending machine according to Claim **1,** wherein said hinge means **(28)** are configured to allow the rotation of said second support element **(21)** with respect to said first support element **(19)** around said hinge axis **(30)** between two extreme end of stroke angular positions one of which is operational and at least partially closing said opening **(7)** and the other is overturned for inspection/maintenance of at least part of said components **(11),** wherein the second support element **(21)** is overturned and protrudes to the outside of the container **(2).**

3. The vending machine according to Claim **1** or **2,** wherein said second support element **(21)** extends upwards from the first support element **(19)** and in that said rotation axis **(30)** is arranged adjacent to a lower end of said second support element **(21).**

4. The vending machine according to any one of the preceding claims, wherein said second element **(21)** comprises a flat front portion **(32)** partially closing said opening **(7)** and in that at least part of said second components **(11B)** are connected to a surface of said flat front portion (31) facing said chamber **(8).**

5. The vending machine according to any one of the preceding claims, wherein said second element **(21)** comprises a flat front portion **(32)** at least partially closing said chamber **(8)** and in that at least part of said second components **(11B)** are connected to an external surface of said flat front portion **(32).**

6. The vending machine according to any one of the preceding claims, wherein said guide and slide means **(22)** comprise a pair of guides **(23)** stably coupled to said container **(2)** and a pair of slides **(24)** each sliding along a relative said guide **(23)** and stably coupled to said first element **(19);** said slides **(24)** carrying part of said hinge means **(22).**

7. The vending machine according to any one of the preceding claims, wherein said support means **(12, 16)** further comprise a shelf **(12)** coupled to said container **(2)** above said second support element **(21);** said shelf **(20)** supporting storage tanks for soluble substances.

8. The vending machine according to any one of the preceding claims, further comprising an assembly **(35)** for producing espresso coffee; at least one component **(37)** of said assembly **(35)** for producing coffee being carried by said second support element **(21).**

## Patentansprüche

1. Getränkeverkaufsautomat **(1),** der Getränkeautomat **(1)** umfassend einen Behälter **(2),** der eine Gehäusekammer **(8)** abgrenzt, und der eine Öffnung **(7)** für den Zugang zu der Kammer **(8)** aufweist; eine Getränkezubereitungsvorrichtung **(10, 35),** die eine Vielzahl von Komponenten **(11)** zum Herstellen von Getränken, die mindestens teilweise in der Kammer **(8)** untergebracht sind, und Stützmittel **(12, 16)** für die Komponenten **(11)** aufweist; wobei die Stützmittel **(12, 16)** ein erstes Stützelement **(19)** für einen ersten Teil **(11A)** der Komponenten **(11)** und ein zweites Stützelement **(21)** für einen zweiten Teil (**11B**) der Komponenten **(11)** umfassen; wobei das erste Stützelement eine horizontale Wand **(19)** umfasst, und wobei mindestens ein Teil der ersten Komponenten **(11A)** direkt auf der Wand **(19)** aufliegt oder mit der Wand **(19)** durch Einfügung von Befestigungsstrukturen an der Wand **(19)** gekoppelt ist; Führungs- und Gleitmittel **(22),** die zwischen dem ersten Stützelement **(19)** und dem Behälter **(2)** eingefügt sind, um dem ersten Stützelement **(19)** eine Translationsbewegung in einer Richtung **(D)** zwischen zwei äußersten Hubendpositionen zu ermöglichen, von denen eines in die Kammer **(8)** eingeführt ist, und eines mindestens teilweise aus der Kammer **(8)** herausgezogen ist; Scharniermittel **(28),** die zwischen dem ersten Stützelement **(19)** und dem zweiten Stützelement **(21)** eingefügt sind, zum Ermöglichen der Drehung des zweiten Stützelements **(21)** in Bezug auf das erste Stützelement **(19)** um eine Scharnierachse **(30)** herum, die horizontal und orthogonal zu der Richtung **(D)** ist, unabhängig von der Position des ersten Stützelements **(19)** zwischen den äußersten Hubendpositionen;
wobei das zweite Stützelement **(21)** zwischen zwei äußersten Hubendwinkelpositionen beweglich ist, von denen eine eine vertikale Betriebsposition zum Schließen der Kammer **(8)** ist und eine davon eine nach vorne gekippte Position ist;
wobei das erste **(19)** und das zweite **(21)** Stützelement einen Teil einer ausziehbaren Schublade **(16)** ausbilden, die dauerhaft mit dem Behälter **(2)** gekoppelt ist und mindestens einen Teil der Komponenten **(11)** unterbringt; wobei das zweite Stützelement eine Klapptür **(21)** der Schublade **(16)** ausbildet.

2. Verkaufsautomat nach Anspruch **1,** wobei die Scharniermittel **(28)** konfiguriert sind, um die Drehung des zweiten Stützelements **(21)** in Bezug auf das erste Stützelement **(19)** um die Scharnierachse **(30)** zwischen zwei äußersten Hubendwinkelpositionen ermöglichen, von denen eine betriebsbereit ist und die Öffnung **(7)** mindestens teilweise schließt und die andere für die Inspektion/Wartung von mindestens einem Teil der Komponenten **(11)** gekippt ist, wobei das zweite Stützelement **(21)** gekippt ist und zu der Außenseite des Behälters **(2)** vorsteht.

3. Verkaufsautomat nach Anspruch **1** oder **2,** wobei sich das zweite Stützelement **(21)** nach oben von dem ersten Stützelement **(19)** erstreckt und wobei die Drehachse **(30)** angrenzend an ein unteres Ende des zweiten Stützelements **(21)** angeordnet ist.

4. Verkaufsautomat nach einem der vorstehenden Ansprüche, wobei das zweite Element **(21)** einen flachen Vorderabschnitt **(32)** aufweist, der die Öffnung (7) teilweise schließt, und wobei mindestens ein Teil der zweiten Komponenten (**11B**) mit einer Oberfläche des flachen Vorderabschnitts **(31)** verbunden ist, die der Kammer **(8)** zugewandt ist.

5. Verkaufsautomat nach einem der vorstehenden Ansprüche, wobei das zweite Element **(21)** einen flachen Vorderabschnitt **(32)** aufweist, der die Kammer **(8)** mindestens teilweise schließt, und wobei mindestens ein Teil der zweiten Komponenten **(11B)** mit einer Außenoberfläche des flachen Vorderabschnitts **(32)** verbunden ist.

6. Verkaufsautomat nach einem der vorstehenden Ansprüche, wobei die Führungs- und Gleitmittel **(22)** ein Paar Führungen **(23),** die mit dem Behälter **(2)** stabil gekoppelt sind, und ein Paar Gleitstücke **(24),** die jeweils entlang einer relativen Führung **(23)** gleiten und mit dem ersten Element **(19)** stabil gekoppelt sind, umfassen; wobei die Gleitstücke **(24)** einen Teil der Scharniermittel **(22)** tragen.

7. Verkaufsautomat nach einem der vorstehenden Ansprüche, wobei die Stützmittel **(12, 16)** ferner eine Ablage **(12),** die mit dem Behälter **(2)** über dem zweiten Stützelement **(21)** verbunden ist, umfassen; wobei die Ablage **(20)** Lagertanks für lösliche Substanzen stützt.

8. Verkaufsautomat nach einem der vorstehenden Ansprüche, ferner umfassend eine Vorrichtung **(35)** zum Zubereiten von Espressokaffee; wobei mindestens eine Komponente **(37)** der Anordnung **(35)** zum Zubereiten von Kaffee durch das zweite Stützelement **(21)** getragen wird.

## Revendications

1. Distributeur automatique de boissons **(1),** le distributeur **(1)** comprenant un contenant **(2)** délimitant une chambre de logement **(8)** et ayant une ouverture **(7)** pour l'accès à ladite chambre **(8)** ; un ensemble de préparation de boissons **(10, 35)** ayant une pluralité de composants **(11)** pour la production de boissons logés au moins en partie dans ladite chambre **(8)** et un moyen de support **(12, 16)** pour lesdits composants **(11) ;** ledit moyen de support **(12, 16)** comprend un premier élément de support **(19)** pour une première partie **(11A)** desdits composants **(11)** et un second élément de support **(21)** pour une seconde partie (**11B**) desdits composants **(11) ;** dans lequel ledit premier élément de support comprend une paroi horizontale **(19),** et dans lequel au moins une partie desdits premiers composants **(11A)** repose directement sur ladite paroi **(19)** ou est accouplée à ladite paroi **(19)** par l'interposition de structures de fixation à ladite paroi **(19)** ; un moyen de guidage et de glissement **(22),** interposé entre le premier élément de support **(19)** et ledit contenant **(2)** pour permettre audit premier élément de support **(19)** une translation dans une direction **(D)** entre deux positions extrêmes de fin de course, dont l'une est insérée dans ladite chambre **(8)** et l'autre est au moins partiellement extraite de ladite chambre **(8)** ; un moyen d'articulation **(28)** interposés entre ledit premier élément de support **(19)** et ledit second élément de support **(21),** pour permettre la rotation dudit second élément de support **(21)** par rapport audit premier élément de support **(19)** autour d'un axe d'articulation **(30)** qui est horizontal et orthogonal à ladite direction **(D),** quelle que soit la position dudit premier élément de support **(19)** entre lesdites positions extrêmes de fin de course ;
dans lequel le second élément de support **(21)** est mobile entre deux positions angulaires extrêmes de fin de course, dont l'une est une position verticale opérationnelle pour fermer ladite chambre **(8),** et l'autre est une position renversée vers l'avant ;
dans lequel lesdits premier **(19)** et second **(21)** éléments de support font partie d'un tiroir extractible **(16)** accouplé de manière permanente audit contenant **(2)** et logeant au moins une partie desdits composants **(11)** ; ledit second élément de support formant une porte à rabat **(21)** dudit tiroir **(16).**

2. Distributeur automatique selon la revendication **1,** dans lequel ledit moyen d'articulation **(28)** est conçu pour permettre la rotation dudit second élément de support **(21)** par rapport audit premier élément de support **(19)** autour dudit axe d'articulation **(30)** entre deux positions angulaires extrêmes de fin de course, l'une étant opérationnelle et fermant au moins partiellement ladite ouverture **(7)** et l'autre étant renversée pour l'inspection/l'entretien d'au moins une partie desdits composants **(11),** dans lequel le second élément de support **(21)** est renversé et fait saillie à l'extérieur du contenant **(2).**

3. Distributeur automatique selon la revendication **1** ou **2,** dans lequel ledit second élément de support **(21)** s'étend vers le haut à partir du premier élément de support **(19)** et dans lequel ledit axe de rotation **(30)** est agencé à côté d'une extrémité inférieure dudit second élément de support **(21).**

4. Distributeur automatique selon l'une quelconque des revendications précédentes, dans lequel ledit second élément **(21)** comprend une partie frontale plate **(32)** fermant partiellement ladite ouverture **(7)** et dans lequel au moins une partie desdits seconds composants (**11B**) sont reliés à une surface de ladite partie frontale plate **(31)** faisant face à ladite chambre **(8).**

5. Distributeur automatique selon l'une quelconque des revendications précédentes, dans lequel ledit second élément **(21)** comprend une partie frontale plate **(32)** fermant au moins partiellement ladite chambre **(8)** et dans lequel au moins une partie desdits seconds composants (**11B**) sont reliés à une surface externe de ladite partie frontale plate **(32).**

6. Distributeur automatique selon l'une quelconque des revendications précédentes, dans lequel ledit moyen de guidage et de glissement **(22)** comprend une paire de guides **(23)** accouplés de manière stable audit contenant **(2)** et une paire de glissières **(24)** glissant chacune le long d'un guide **(23)** relatif et accouplées de manière stable audit premier élément **(19)** ; lesdites glissières **(24)** portant une partie du moyen d'articulation **(22).**

7. Distributeur automatique selon l'une quelconque des revendications précédentes, dans lequel ledit moyen de support **(12, 16)** comprend en outre une étagère **(12)** accouplée audit contenant **(2)** au-dessus dudit second élément de support **(21)** ; ladite étagère **(20)** supportant des réservoirs de stockage de substances solubles.

8. Distributeur automatique selon l'une quelconque des revendications précédentes, comprenant en outre un ensemble **(35)** pour la production de café expresso ; au moins un composant **(37)** dudit ensemble **(35)** pour la production de café étant porté par ledit second élément de support **(21).**
